# EUROPÄISCHE PATENTSCHRIFT

(11) **EP 0 366 192 B1**
(45) Veröffentlichungstag und Bekanntmachung des Hinweises auf die Patenterteilung: **14.06.1995**
(21) Anmeldenummer: 89202644.4
(22) Anmeldetag: 19.10.1989
(51) Int. Cl.: G10L 5/00

(54) **Textverarbeitungsvorrichtung**
Textprocessing arrangement
Dispositiv de traitement de texte

(30) Priorität: 25.10.1988 AT 2647/88
(43) Veröffentlichungstag der Anmeldung: 02.05.1990
(73) Patentinhaber: Philips Electronics N.V., 5621 BA Eindhoven (NL)
(72) Erfinder: Höllerbauer, Werner, NL-5656 AA Eindhoven (NL)
(74) Vertreter: van der Kruk, Willem Leonardus

(56) Entgegenhaltungen:
- US-A- 4 041 467
- ICASSP '85, PROCEEDINGS OF THE INTERNATIONAL CONFERENCE ON ACOUSTICS, SPEECH, AND SIGNAL PROCESSING, Tampa, Florida, 26. - 29. März 1985, Band 2, Seiten 858-861, IEEE, New York, US; F. JELINEK: "A real-time, isolated-word, speech recognition system for dictation transcription"

## Beschreibung

Die Erfindung betrifft eine Vorrichtung zur Textverarbeitung, gemäss dem Oberbegriff des Hauptanspruchs. Eine derartige Vorrichtung zur Textverarbeitung ist in der US-PS 3 770 892 beschrieben, wobei aber auf die Art und Weise, wie von der Spracherkennungseinrichtung falsch festgestellte Wörter korrigiert werden können, nicht näher eingegangen ist. Da bei bestehenden derartigen Vorrichtungen zur Textverarbeitung Fehler in der Feststellung von Wörtern relativ häufig vorkommen, kommt einer diesbezüglichen Kontrollmöglichkeit beziehungsweise Korrekturmöglichkeit besondere Bedeutung zu.

Die Erfindung hat sich zum Ziel gesetzt, eine Vorrichtung zur Textverarbeitung der eingangs angeführten Gattung so auszubilden, daß eine Kontrolle der festgestellten Wörter beziehungsweise eine Korrektur von falsch festgestellten Wörtern einfach, schnell und sicher vorgenommen werden kann. Die Vorrichtung ist dazu gemäss den Merkmalen des kennzeichnenden Teils des Hauptanspruchs gekennzeichnet.

Dadurch, daß die einem Text entsprechenden Tonsignale zusätzlich in einem ersten weiteren Speicher gespeichert werden und außerdem in Korrelation zu diesen gespeicherten Tonsignalen auch zu den von der Spracherkennungseinrichtung festgestellten, in einem Wortspeicher gespeicherten Wörtern des Textes zeitbezogene Anfangsmarkierungen und Endmarkierungen für diese Wörter in einem zweiten weiteren Speicher gespeichert werden, kann auf einfache Weise jedem im Wortspeicher gespeicherten festgestellten Wort jederzeit abschnittsweise das zugehörige Tonsignal beziehungsweise umgekehrt jedem Abschnitt des Tonsignales das zugehörige festgestellte Wort zugeordnet werden. Auf diese Weise kann beispielsweise das einem zu kontrollierenden beziehungsweise zu korrigierenden Wort, das in seiner Darstellung mit der Anzeigevorrichtung vom Computer her gekennzeichnet wurde, zugehörige ursprüngliche Tonsignal vom Benützer der Vorrichtung akustisch abgehört werden, wodurch er in der Lage ist, das betreffende ursprüngliche Wort richtig zu erkennen und falls erforderlich, in korrigierter Form mit der Tastatur in die Vorrichtung einzugeben. Eine andere Möglichkeit besteht darin, eine laufende Kontrolle der mit der Anzeigevorrichtung dargestellten festgestellten Wörter des Textes vorzunehmen, indem die im ersten weiteren Speicher gespeicherten Tonsignale kontinuierlich akustisch wiedergegeben werden, wobei gleichzeitig laufend die zugehörigen festgestellten Wörter in ihrer Darstellung mit der Anzeigevorrichtung vom Computer her gekennzeichnet werden, so daß der Benützer der Vorrichtung laufend auf das jeweils festgestellte Wort hingewiesen wird, zu dem er gerade das zugehörige ursprüngliche Tonsignal hört, wodurch er ebenfalls in der Lage ist, korrekturbedürftige Wörter einfach und sicher zu erkennen.

Eine erfindungsgemässe Vorrichtung, die zusätzliche versehen ist mit den Merkmalen des Oberbegriff des 2 Anspruchs, ist bevorzugt gekennzeichnet durch die Merkmale des kennzeichnenden Teils dieses Anspruchs.

Auf diese Weise werden zuerst falsch festgestellte und danach korrigierte Wörter in einen Lernprozess der Vorrichtung mit einbezogen, wodurch sich im Laufe der Benützung der Vorrichtung die Fehlerrate falsch festgestellter Wörter ständig verringert und so die gesamte Vorrichtung zur Textverarbeitung immer zuverlässiger arbeitet.

Eine erfindungsgemässe Vorrichtung kann auch durch die Merkmale des Anspruchs 3 gekennzeichnet sein. Auf diese Weise werden nicht nur einzelne korrigierte Wörter, sondern der gesamte bereits korrigierte Text in einen Lernprozess der Vorrichtung mit einbezogen, wodurch sich im Laufe der Benützung der Vorrichtung nicht nur die Fehlerrate falsch festgestellter Wörter ständig verringert, sondern auch eine rasche Anpassung der Vorrichtung an die charakteristische Aussprache eines bestimmten Sprechers beziehungsweise an typische Textfolgen, die ein bestimmter Sprecher häufig verwendet, erreicht wird.

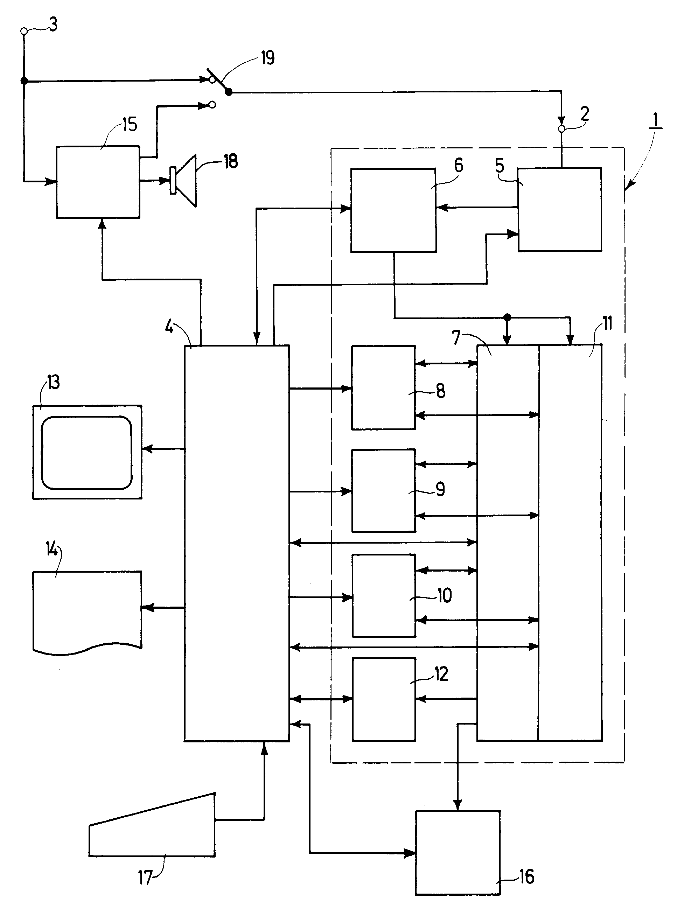

Die Erfindung wird im folgenden anhand der Zeichnung, in der ein Ausführungsbeispiel der Erfindung dargestellt ist, auf das sie jedoch nicht beschränkt sein soll, näher erläutert. Die in der Zeichnung dargestellte Figur zeigt ein Blockschaltbild der Vorrichtung zur Textverarbeitung.

In dem in der Figur gezeigten Blockschaltbild ist mit 1 eine Spracherkennungseinrichtung bezeichnet, der an ihrem Eingang 2 von einem Eingang 3 der Vorrichtung zur Textverarbeitung her die einem Text entsprechenden Tonsignale in Form elektrischer Signale zugeführt werden, die beispielsweise unmittelbar von einem Mikrofon stammen oder von einem als Zwischenspeicher verwendeten Diktiergerät wiedergegeben werden können. Diese elektrischen Signale können dabei entweder analoge Signale oder digitale Signale, letztere auch bereits in codierter Form, sein, je nachdem welche Art von Spracherkennungseinrichtung verwendet wird, wofür eine Reihe von Ausführungsformen bekannt sind, die im vorliegenden Fall zur Anwendung kommen können. Die Spracherkennungseinrichtung 1 wird von einem Computer 4 her gesteuert, der auch die Steuerung der gesamten Vorrichtung zur Textverarbeitung übernimmt. Vom Eingang 2 der Spracherkennungseinrichtung 1 gelangt das elektrische Signal in üblicher Weise an einen Akustikanalysator 5, der herausragende Merkmale dieses Signales, die dasselbe kennzeichnen, feststellt, wie beispielsweise Polstellen von Energiekonzentrationen innerhalb des Frequenzspektrums, die dann in einem Merkmalspeicher 6 gespeichert werden. Von diesem Merkmalspeicher 6 her wird die eigentliche Worterkennungseinrichtung 7 der Spracherkennungseinrichtung 1 gespeist, die außerdem mit einer Reihe von Speichern in Verbindung steht, die ihr das Feststellen einzelner Wörter ermöglichen. Zu diesen Speichern zählen in üblicher Weise ein Sprachmodellspeicher 8 zur Speicherung wahrscheinlicher Abfolgen von Wörtern eines bestimmten Sprechers oder auch mehrerer bestimmter Sprecher, ein Phonetikspeicher 9 zur Speicherung der gegebenenfalls auch sprecherbezogenen Lautzusammensetzungen der Wörter, die das Spracherkennungssystem kennt, und ein Aussprachenmerkmalspeicher 10 zur Speicherung von Parametern betreffend die charakteristische Aussprache eines bestimmten Sprechers oder auch mehrerer bestimmter Sprecher. Im vorliegenden Fall weist die Spracherkennungseinrichtung 1 weiters eine Lernvorrichtung 11 auf, die unmittelbar mit der Worterkennungseinrichtung 7 und dem Merkmalspeicher 6 zusammenarbeitet und auch zu den vorerwähnten Speichern 8, 9 und 10 Zugriff hat. Im Zuge eines Lernprozesses werden dabei die mit der Spracherkennungseinrichtung 1 aus dem von einem bestimmten Sprecher eines Wortes stammenden Tonsignal gewonnenen und im Merkmalspeicher 6 gespeicherten Merkmale von der Lernvorrichtung 11 im Vergleich mit ihr zugeführten, beispielsweise in den Speichern 8, 9 und 10 gespeicherten sprachbezogenen Parametern und dem ihr weiters beispielsweise vom Computer 4 her zugeführten, zu dem betreffenden Tonsignal gehörenden Wort ausgewertet und in Form von sprecherbezogenen Parametern in den Speichern 8, 9 und 10 der Spracherkennungseinrichtung gespeichert, wo sie dann im weiteren der Worterkennungseinrichtung 7 zur Verfügung stehen.

Mit diesen Hilfsmitteln können die in den Tonsignalen enthaltenen einzelnen Wörter des gesamten Textes erkannt werden, die dann als Digitalsignale in einem Wortspeicher 12 gespeichert werden, wo sie dann ihrerseits für eine weitere Verarbeitung in einer Verarbeitungseinrichtung (4,13,14,17) zur Verfügung stehen und über den Computer 4 einer Anzeigevorrichtung 13 oder einem Drucker 14 zugeführt werden können. Auf diese Weise kann der in den Tonsignalen enthaltene Text unmittelbar mittels der Anzeigevorrichtung 13 als aus einzelnen Wörtern bestehender Text dargestellt werden, wo er dann für eine Kontrolle beziehungsweise Korrektur zur Verfügung steht, was erforderlich ist, weil derartige Spracherkennungseinrichtungen üblicherweise eine gewisse Fehlerrate aufweisen, dahingehend, daß einzelne Worte oder Wortgruppen nicht richtig festgestellt und demgemäß falsch dargestellt werden.

Um nun die Korrektur falsch festgestellter Wörter zu erleichtern, sind in der vorliegenden Vorrichtung zur Textverarbeitung weitere Maßnahmen gesetzt, die nachfolgend erläutert werden.

Hiezu ist insbesondere vorgesehen, daß die dem Eingang 3 der Vorrichtung zur Textverarbeitung in Form von elektrischen Signalen zugeführten Tonsignale in einem ersten weiteren Speicher 15 gespeichert werden. Für die Art und Weise der Speicherung der Tonsignale im ersten weiteren Speicher 15 bestehen je nach der Ausbildung dieses weiteren Speichers verschiedene Möglichkeiten. Beispielsweise kann als solcher erster weiterer Speicher ein Tonbandgerät dienen, auf dem die Tonsignale als analoge Signale gespeichert werden. Als solcher erster weiterer Speicher kann aber auch ein digitaler Speicher verwendet werden, dem die Tonsignale nach ihrer Digitalisierung oder Codierung zugeführt werden, wobei derartige Speicher den Vorteil eines schnelleren Zugriffs zu den Speicherinhalten bieten. Dabei kann es sich beispielsweise entweder um einen Plattenspeicher oder einen Festkörperspeicher handeln. Als solcher erster weiterer Speicher kann beispielsweise auch der Speicher einer zentralen Diktieranlage dienen. Es ist auch möglich, daß von einem Ausgang eines solchen ersten weiteren Speichers 15 her die Spracherkennungseinrichtung 1 selbst mit dem ihrem Eingang 2 zuzuführenden Eingangssignal versorgt wird.

Weiters ist vorgesehen, daß den durch die Spracherkennungseinrichtung festgestellten, im Wortspeicher 12 gespeicherten einzelnen Wörtern Anfangsmarkierungen und Endmarkierungen zugeordnet werden, die im zeitlichen Zusammenhang mit den im ersten weiteren Speicher 15 gespeicherten Tonsignalen stehen. Auf diese Weise wird jedes festgestellte Wort durch eine Anfangsmarkierung und eine Endmarkierung eingegrenzt, wobei die Endmarkierung eines Wortes gleichzeitig die Anfangsmarkierung des nächstfolgenden Wortes sein kann. Wesentlich ist dabei, daß bei der Bildung dieser Markierungen gewährleistet ist, daß sie in einem zeitlichen Zusammenhang mit den im ersten weiteren Speicher 15 gespeicherten Tonsignalen stehen. Hiezu kann während des Spracherkennungsvorganges, beispielsweise mit Hilfe des Taktsignales des Computers 4, eine Zeitzählung vorgenommen werden, die nacheinander die einzelnen Zeitabschnitte festlegt, die zwischen den einzelnen Feststellungen von Wörtern auftreten. Die auf eine solche Art und Weise gewonnenen Anfangsmarkierungen und Endmarkierungen der einzelnen festgestellten Worte werden nun in einem zweiten weiteren Speicher 16, der an die Worterkennungseinrichtung 7 angeschlossen ist, gespeichert, wobei über den Computer 4 ein Zugriff zu diesem zweiten weiteren Speicher 16 besteht. Weiters hat der Computer 4 auch Zugriff zum ersten weiteren Speicher 15, in dem die Tonsignale gespeichert sind. Somit kann mit dem Computer 4 über die im zweiten weiteren Speicher 16 gespeicherte Anfangsmarkierung und Endmarkierung eines festgestellten Wortes eine Korrelation zu dem im ersten weiteren Speicher 15 gespeicherten, zu diesem festgestellten Wort gehörenden Tonsignal hergestellt werden, wobei dann vom Computer 4 her gesteuert ein mit der Anzeigevorrichtung 13 dargestelltes festgestelltes Wort beispielsweise mit einem Cursor oder durch Unterstreichen kennzeichenbar und gleichzeitig das zugehörige Tonsignal akustisch wiedergebbar ist.

Auf diese Weise werden verschiedene Möglichkeit geschaffen, um einfach, schnell und sicher eine Kontrolle beziehungsweise eine Korrektur des mit der Anzeigevorrichtung 13 dargestellten wortmäßigen Textes vornehmen zu können. Über eine mit dem Computer 4 zusammenwirkende, zur Eingabe von Steuerbefehlen und Daten dienende Tastatur 17 kann dann ein mit der Anzeigevorrichtung 13 dargestelltes gekennzeichnetes festgestelltes Wort gegebenenfalls korrigiert werden. So kann beispielsweise innerhalb des gesamten mit der Anzeigevorrichtung dargestellten wortmäßigen Textes ein einzelnes Wort desselben von der Tastatur 17 und dem Computer 4 her gesteuert gekennzeichnet werden, worauf dann mit Hilfe des Computers 4 die zu dem gekennzeichneten Wort dazugehörende, im zweiten weiteren Speicher 16 gespeicherte Anfangsmarkierung und Endmarkierung ermittelt und in Abhängigkeit dieser Markierungen das im ersten weiteren Speicher 15 gespeicherte zugehörige Tonsignal abgefragt und beispielsweise mit einem Lautsprecher 18 akustisch wiedergegeben werden, wobei eine solche Wiedergabe einmalig oder auch mehrmalig nacheinander erfolgen kann. Auf diese Weise hat der Benützer der Vorrichtung unmittelbar die Möglichkeit das dem betreffenden gekennzeichneten Wort zugehörige Tonsignal abzuhören und damit festzustellen, ob das betreffende Wort richtig oder falsch durch die Spracherkennungseinrichtung 1 festgestellt wurde. Handelt es sich um ein falsch festgestelltes Wort, hat der Benützer der Vorrichtung dann die Möglichkeit, mit Hilfe der Tastatur 17 das falsch festgestellte Wort durch das richtige Wort zu ersetzen. Es kann aber auch beispielsweise eine laufende Kontrolle des mit der Anzeigevorrichtung 13 dargestellten wortmäßigen Textes vorgenommen werden, dahingehend, daß die im ersten weiteren Speicher 15 gespeicherten Tonsignale kontinuierlich akustisch wiedergegeben werden, wobei gleichzeitig laufend die zugehörigen festgestellten Wörter in ihrer Darstellung mit der Anzeigevorrichtung 13 vom Computer 4 her, dies im Zusammenhang mit den im zweiten weiteren Speicher 16 gespeicherten Anfangsmarkierungen und Endmarkierungen jedes festgestellten Wortes, gekennzeichnet werden. Der Benützer der Vorrichtung hört somit kontinuierlich den gesprochenen Text und wird dabei gleichzeitig auf das jeweils durch die Spracherkennungseinrichtung festgestellte Wort durch dessen Kennzeichnung in der dargestellten Textform hingewiesen. Wie ersichtlich, sind durch diese verschiedenen Anwendungsmöglichkeiten der beschriebenen Vorrichtung zur Textverarbeitung eine Textkontrolle beziehungsweise eine Textkorrektur einfach und sicher durchführbar, wonach dann der fertiggestellte richtige Text mit dem Drucker 14 ausgedruckt werden kann.

Als vorteilhaft hat sich erwiesen, wenn ein mit der Anzeigevorrichtung 13 dargestelltes gekennzeichnetes festgestelltes Wort, das mittels der Tastatur 17 in eine richtige Form korrigiert wurde, in seiner korrigierten richtigen Form zusammen mit den aus dem Tonsignal des ursprünglichen Wortes mit der Spracherkennungseinrichtung 1 gewonnenen, im Merkmalspeicher 6 gespeicherten Merkmalen der Lernvorrichtung 11 für eine Auswertung zugeführt wird, wobei dann die im Zuge dieser Auswertung neu gewonnenen sprecherbezogenen Parameter ebenfalls in den Speichern 8, 9 und 10 der Spracherkennungseinrichtung 1 gespeichert werden. Im vorliegenden Fall wurde vorausgesetzt, daß für solche Lernvorgänge im Merkmalspeicher 6 sämtliche aus den Tonsignalen des gesamten Textes mit der Spracherkennungseinrichtung 1 gewonnenen Merkmale ständig zur Verfügung stehen und die dem Tonsignal eines Wortes zugehörigen Merkmale jeweils abfragbar sind, was einen Merkmalspeicher 6 mit relativ großer Speicherkapazität erforderlich macht. Eine andere Möglichkeit besteht darin, im Zuge solcher Lernvorgänge auf die im ersten weiteren Speicher 15 gespeicherten Tonsignale zurückzugreifen und jeweils die betreffenden Merkmale mit der Spracherkennungseinrichtung 1 neu zu ermitteln und wieder im Merkmalspeicher 6 zu speichern, wodurch dann für den Merkmalspeicher 6 nur eine geringere Speicherkapazität erforderlich ist. Hiezu kann beispielsweise mit einem Umschalter 19 der Eingang 2 der Spracherkennungseinrichtung 1 vom Eingang 3 der Vorrichtung auf einen Ausgang des ersten weiteren Speichers 15 umgeschaltet werden. Vom Computer 4 her besteht dann wieder Zugriff zu jedem im ersten weiteren Speicher 15 gespeicherten Tonsignalabschnitt der zu einem betreffenden von der Spracherkennungseinrichtung festgestellten Wort gehört. Auf diese Weise führt die Lernvorrichtung 11 in den Speichern 8, 9 und 10 der Spracherkennungseinrichtung 1 solche Änderungen beziehungsweise Ergänzungen der gespeicherten sprecherbezogenen Parameter durch, daß auf den betreffenden Sprecher bezogen ein weiterer Lernprozeß in der Spracherkennungseinrichtung 1 abläuft, der bewirkt, daß, wenn in der Zukunft wieder ein Tonsignal eines derartigen Wortes auftritt, dieses dann mit größerer Wahrscheinlichkeit sofort richtig durch die Spracherkennungseinrichtung 1 festgestellt und damit die Fehlerrate einer derartigen Vorrichtung zur Textverarbeitung schrittweise immer weiter herabgesetzt wird.

Ebenfalls als vorteilhaft hat sich erwiesen, wenn nach mittels der Tastatur 17 erfolgter Korrektur aller von der Spracherkennungseinrichtung 1 falsch festgestellter Wörter die den gesamten Text bildenden Wörter zusammen mit den aus den Tonsignalen der ursprünglichen Wörter mit der Spracherkennungseinrichtung gewonnenen, im Merkmalspeicher 6 gespeicherten Merkmalen der Lernvorrichtung 11 für eine Auswertung zugeführt werden, wobei dann die im Zuge dieser Auswertung neu gewonnenen sprecherbezogenen Parameter ebenfalls in den Speichern 8, 9 und 10 der Spracherkennungseinrichtung gespeichert werden. Auf diese Weise wird der gesamte bereits korrigierte Text in einen Lernprozess der Vorrichtung mit einbezogen, wodurch sowohl die Fehlerrate falsch festgestellter Wörter verringert als auch eine rasche Anpassung der Vorrichtung an die charakteristische Aussprache eines bestimmten Sprechers und an eine häufige Verwendung bestimmter Textfolgen durch den betreffenden Sprecher erreicht wird, was insgesamt gesehen die Funktionsfähigkeit einer solchen Vorrichtung wesentlich verbessert.

Wie aus vorstehendem ersichtlich ist, besteht eine Reihe von Abwandlungen des beschriebenen Ausführungsbeispieles, ohne daß dabei der Rahmen der Erfindung verlassen wird. In diesem Zusammenhang sind insbesondere die Art und Weise der Speicherung der Tonsignale im ersten weiteren Speicher, die Art und Weise der Gewinnung und Auswertung der Anfangsmarkierung und Endmarkierung, die ein durch die Spracherkennungseinrichtung festgestelltes Wort eingrenzen, und die Wirkungsweise der Spracherkennungseinrichtung selbst zu erwähnen. Selbstverständlich können mit einer solchen Vorrichtung zur Textverarbeitung auch noch andere für solche Vorrichtungen übliche Funktionen, wie beispielsweise ein Mischen von Texten oder dergleichen, ausführbar sein.

## Patentansprüche

1. Textverarbeitungsvorrichtung, mit
- einer Spracherkennungseinrichtung (1) zum Empfangen von einem Text entsprechenden Tonsignalen und zum Feststellen der in den Tonsignalen enthaltenen Wörter,
- einem Wortspeicher (12) zum Speichern der festgestellten Wörter in der Form von Digitalsignalen,
- einer mit dem Wortspeicher (12) verbundenen Verarbeitungseinrichtung (4,13,14,17) der die festgestellten Wörter in Form von Digitalsignalen zuführbar sind, und die eine Anzeigevorrichtung (13) zum als Text darstellen der festgestellten Wörter und eine Korrekturvorrichtung (17) zum Korrigieren von falsch festgestellten Wörter aufweist, dadurch gekennzeichnet dass ein erster weiterer Speicher (15) zum Speichern der Tonsignale vorgesehen ist, dass die Verarbeitungseinrichtung (4,13,14,17) einen mit einer Tastatur (17) zusammenwirkenden Computer (4) aufweist, der zum Steuern der Spracherkennungseinrichtung (1) eingerichtet ist, dass Mittel (1) zum Zuordnen von Anfangsmarkierungen und Endmarkierungen zu den im Wortspeicher (12) gespeicherten Wörtern vorgesehen sind, welche Anfangsmarkierungen und Endmarkierungen im zeitlichen Zusammenhang mit den im ersten weiteren Speicher (15) gespeicherten Tonsignalen stehen, dass ein zweiter weiterer Speicher (16) zum Speichern der Anfangsmarkierungen und Endmarkierungen vorgesehen ist, dass der Computer (4) weiter zum Herstellen einer Korrelation zwischen einem im Wortspeicher (12) gespeicherten Wort und dem im ersten weiteren Speicher (15) gespeicherten, zu dem Wort gehörenden Tonsignal über die im zweiten weiteren Speicher (16) gespeicherte Anfangsmarkierung und Endmarkierung dieses Wortes eingerichtet ist, das der Computer (4) zusätzlich zum Kennzeichnen von mindesten einem mit der Anzeigevorrichtung (13) dargestellten Wort und zum Ansteuern von Mitteln (15,18) zum gleichzeitigen akustisch Wiedergeben des einem dargestellten und gekennzeichneten Wort zugehörigen Tonsignals eingerichtet ist,
und dass die Tastatur (17) zum Eingeben von Daten im Computer (4) zum gegebenenfalls Korrigieren des mit der Anzeigevorrichtung (13) dargestellten und gekennzeichneten Wortes eingerichtet ist.

2. Vorrichtung gemäss Anspruch 1, mit einer Lernvorrichtung (11) zum Zusammenwirken mit der Spracherkennungseinrichtung (1), wobei die Spracherkennungseinrichtung (1) zum Gewinnen von herausragenden kennzeichnenden Merkmale aus einem Tonsignal, das mindestens einem von einem Sprecher gesprochenen Wort entspricht, und zum Speichern dieser Merkmale in Form von sprecherbezogenen Parametern, auf welche die Spracherkennungseinrichtung (1) im Zuge der Spracherkennung Zugriff nimmt, eingerichtet ist, und wobei die Lernvorrichtung (11) zum Empfangen der Merkmale und zum Empfangen von sprachbezogenen Parametern und zum Empfangen des zu dem von dem Sprecher stammenden Tonsignal gehörenden, im Wortspeicher (12) gespeicherten, mindestens einen Wortes und zum Auswerten der empfangenen Merkmale im Vergleich mit den empfangenen sprachbezogenen Parametern und dem empfangenen Wort eingerichtet ist, dadurch gekennzeichnet, dass die Lernvorrichtung (11) zum Empfangen und Auswerten eines mit der Anzeigevorrichtung (13) dargestellten, mittels der Tastatur aus einem falsch festgestellten Wort in ein ursprüngliches richtiges Wort korrigierten Wortes, zum Empfangen aund Auswerten der mit der Spracherkennungseinrichtung (1) gewonnenen Merkmale aus dem dem ursprünglichen Wort entsprechenden Tonsignal, und zum Gewinnen von neuen sprecherbezogenen Parametern im Zuge des Auswertens des korrigierten Wortes und der mit der Spracherkennungseinrichtung gewonnenen Merkmale eingerichtet ist, und dass die Spracherkennungseinrichtuing (1) zum Speichern der neuen sprecherbezogenen Parameter eingerichtet ist.

3. Vorrichtung gemäss Anspruch 1, mit einer Lernvorrichtung (11) zum Zusammenwirken mit der Spracherkennungseinrichtung (1), wobei die Spracherkennungseinrichtung (1) zum Gewinnen von herausragenden kennzeichnenden Merkmale aus einem Tonsignal, das mindestens einem von einem Sprecher gesprochenen Wort entspricht, und zum Speichern dieser Merkmale in Form von sprecherbezogenen Parametern, auf welche die Spracherkennungseinrichtung (1) im Zuge der Spracherkennung Zugriff nimmt, eingerichtet ist, und wobei die Lernvorrichtung (11) zum Empfangen der Merkmale und zum Empfangen von sprachbezogenen Parametern und zum Empfangen des zu dem von dem Sprecher stammenden Tonsignal gehörenden, im Wortspeicher (12) gespeicherten, mindestens einen Wortes und zum Auswerten der empfangenen Merkmale im Vergleich mit den empfangenen sprachbezogenen Parametern und dem empfangenen Wort eingerichtet ist, dadurch gekennzeichnet, dass die Lernvorrichtung (11) zum Empfangen und Auswerten aller mit der Anzeigevorrichtung (13) dargestellten, einen gesamten Text bildenden Wörter, von denen die von der Spracherkennungseinrichtung (1) falsch festgestellten Wörter mittels der Tastatur (17) in die ursprünglichen Wörter korrigiert wurden, und zum Empfangen und Auswerten der mit der Spracherkennungseinrichtung (1) gewonnen Merkmale aus den den ursprünglichen richtigen Wörtern des gesamten Textes entsprechenden Tonsignalen und zum Gewinnen von neuen sprecherbezogenen Parametern im Zuge des Auswertens der den gesamten Text bildenden, teilweise korrigierten Wörter und der mit der Spracherkennungseinrichtung (1) gewonnenen Merkmale eingerichtet ist und dass die Spracherkennungseinrichtung (1) zum Speichern der neuen sprecherbezogenen Parameter eingerichtet ist.

## Claims

1. A text-processing arrangement, comprising
- a speech-recognition device (1) for receiving sound signals corresponding to a text and for detecting the words contained in the sound signals,
- a word memory (12) for storing the detected words in the form of digital signals,
- a processing device (4, 13, 14, 17) connected to the word memory (12) and adapted to receive the detected words in the form of digital signals, which processing device comprises a display device (13) for reproducing the detected words as text and a correction device (17) for the correction of erroneously detected words, characterised in that there is provided a first further memory (15) for storing the sound signals, in that the processing device (4, 13, 14, 17) comprises a computer (4) which cooperates with a keyboard (17) and which is adapted to control the speech-recognition device (1), in that there are provided means (1) for allocating start marks and end marks to the words stored in the word memory (12), which start marks and end marks are related in time to the sound signals stored in the first further memory (15), in that there is provided a second further memory (16) for storing the start marks and end marks, in that the computer (4) is further adapted to establish a correlation between a word stored in the word memory (12) and the sound signal stored in the first further memory (15) and corresponding to the word via the start mark and the end mark corresponding to this word and stored in the second further memory (16), in that the computer (4) is further adapted to highlight at least one detected word displayed on the display device (13) and to control means (15, 18) for the simultaneous acoustic reproduction of the sound signal associated with the one displayed and highlighted word, and in that the keyboard (17) is adapted to load the computer (4) with data for, if necessary, correcting the word displayed and highlighted on the display device (13).

2. An arrangement as claimed in Claim 1, comprising a learning device (11) for cooperation with the speech-recognition device (1), the speech-recognition device (1) being adapted to derive salient characteristic features from a sound signal which corresponds to at least one word enunciated by a speaker and to store said features in the form of speaker-related parameters utilized by the speech-recognition device (1) in the process of speech recognition, and the learning device (11) being adapted to receive the features and to receive speech-related parameters and the at least one word corresponding to the sound signal enunciated by the speaker and stored in the word memory (12) and to analyse the received features in comparison with the received speech-related parameters and the received word, characterised in that the learning device (11) is adapted to receive and analyse one word displayed on the display device (13) and corrected by means of the keyboard to form an original correct word from an erroneously detected word, to receive and analyse the features derived from the sound signal corresponding to the original word by means of the speech-recognition device (1), and to derive new speaker-related parameters in the process of the analysis of the corrected word and of the features derived by means of the speech-recognition device, and in that the speech-recognition device (1) is adapted to store the new speaker-related parameters.

3. An arrangement as claimed in Claim 1, comprising a learning device (11) for cooperation with the speech-recognition device (1), the speech-recognition device (1) being adapted to derive salient characteristic features from a sound signal which corresponds to at least one word enunciated by a speaker and to store said features in the form of speaker-related parameters utilized by the speech-recognition device (1) in the process of speech recognition, and the learning device (11) being adapted to receive the features and to receive speech-related parameters and the at least one word corresponding to the sound signal enunciated by the speaker and stored in the word memory (12) and to analyse the received features in comparison with the received speech-related parameters and the received word, characterised in that the learning device (11) is adapted to receive and analyse all the words forming a complete text and displayed by the display device (13), of which the words detected erroneously by the speech-recognition device (1) have been corrected by means of the keyboard (17) to form the original words, and to receive and analyse the features derived from the sound signals corresponding to the original correct words of the complete text by means of the speech-recognition device (1), and to derive new speaker-related parameters in the process of the analysis of the partly corrected words forming the entire text and of the features derived by means of the speech-recognition device (1), and in that the speech-recognition device (1) is adapted to store the new speaker-related parameters.

## Revendications

1. Dispositif de traitement de texte comportant une unité de reconnaissance vocale (1) destinée à recevoir des signaux audio correspondant à un texte et à identifier les mots contenus dans les signaux audio, une mémoire de mots (12) destinée à stocker les mots identifiés sous la forme de signaux numériques, un dispositif de traitement (4, 13, 14, 17) relié à la mémoire de mots (12), auquel les mots identifiés peuvent être acheminés sous la forme de signaux numériques et qui comporte un dispositif d'affichage (13) destiné à afficher sous forme de texte les mots identifiés ainsi qu'un dispositif de correction (17) destiné à corriger les mots incorrectement identifiés, caractérisé en ce qu'une première mémoire supplémentaire (15) est prévue pour stocker les signaux audio, en ce que le dispositif de traitement (4, 13, 14, 17) comprend un ordinateur (4) fonctionnant en combinaison avec un clavier (17) et conçu pour piloter l'unité de reconnaissance vocale (1), en ce que des moyens sont prévus pour affecter des marques initiales et des marques finales aux mots stockés dans la mémoire de mots (12), ces marques initiales et ces marques finales étant en relation, dans le temps, avec les signaux audio stockés dans la première mémoire supplémentaire (15), en ce qu'une deuxième mémoire supplémentaire (16) stocke les marques initiales et les marques finales, en ce que l'ordinateur (4) est conçu, en outre, pour établir une corrélation entre un mot stocké dans la mémoire de mots (12) et le signal audio stocké dans la première mémoire supplémentaire (15) et correspondant au mot, par l'intermédiaire de la marque initiale et de la marque finale de ce mot stockées dans la deuxième mémoire supplémentaire (16), en ce que l'ordinateur (4) est conçu, en outre, pour caractériser au moins un mot affiché par le dispositif d'affichage (13) et pour piloter des moyens (15, 18) de reproduction acoustique simultanée du signal audio correspondant au mot affiché et caractérisé, et en ce que le clavier (17) est conçu pour introduire des données dans l'ordinateur (4) afin de corriger, le cas échéant, le mot affiché par le dispositif d'affichage (13) et caractérisé.

2. Dispositif suivant la revendication 1, comportant une unité d'apprentissage (11) destinée à fonctionner en combinaison avec l'unité de reconnaissance vocale (1), l'unité de reconnaissance vocale (1) étant conçue pour extraire des attributs caractéristiques principaux d'un signal audio correspondant à au moins un mot prononcé par une personne, et pour stocker ces attributs sous la forme de paramètres liés à la personne qui parle auxquels l'unité de reconnaissance vocale (1) accède au cours de la reconnaissance vocale, et l'unité d'apprentissage (11) étant conçue pour recevoir les attributs, les paramètres liés à la parole et ledit au moins un mot correspondant au signal audio provenant de la personne qui parle et stocké dans la mémoire de mots (12) ainsi que pour évaluer les attributs reçus par comparaison avec les paramètres liés à la parole qui sont reçus et avec le mot reçu, caractérisé en ce que l'unité d'apprentissage (11) est conçue pour recevoir et évaluer un mot affiché par le dispositif d'affichage (13), corrigé au moyen du clavier à partir d'un mot incorrectement identifié afin de rétablir un mot d'origine correct, pour recevoir et évaluer les attributs obtenus par l'unité de reconnaissance vocale (1) à partir du signal audio correspondant au mot d'origine, et pour obtenir de nouveaux paramètres liés à la personne qui parle au cours de l'évaluation du mot corrigé et des attributs obtenus au moyen de l'unité de reconnaissance vocale, et en ce que l'unité de reconnaissance vocale (1) est conçue pour stocker les nouveaux paramètres liés à la personne qui parle.

3. Dispositif suivant la revendication 1, pourvu d'une unité d'apprentissage (11) destinée à fonctionner en combinaison avec l'unité de reconnaissance vocale (1), l'unité de reconnaissance vocale (1) étant conçue pour extraire des attributs caractéristiques principaux d'un signal audio correspondant à au moins un mot prononcé par une personne et pour stocker ces attributs sous la forme de paramètres liés à la personne qui parle auxquels l'unité de reconnaissance vocale (1) accède au cours de la reconnaissance vocale, l'unité d'apprentissage (11) étant conçue pour recevoir les attributs, les paramètres liés à la parole, et ledit au moins un mot correspondant au signal audio provenant de la personne qui parle et stocké dans la mémoire de mots (12) ainsi que pour évaluer les attributs reçus par comparaison avec les paramètres liés à la parole qui sont reçus et avec le mot reçu, caractérisé en ce que l'unité d'apprentissage (11) est conçue pour recevoir et évaluer tous les mots affichés par le dispositif d'affichage (13) et constituant un texte complet, parmi lesquels les mots incorrectement identifiés par l'unité de reconnaissance vocale (1) qui ont été corrigés au moyen du clavier (17) pour rétablir les mots d'origine, et est conçue pour recevoir et évaluer les attributs obtenus au moyen de l'unité de reconnaissance vocale (1) à partir des signaux audio correspondant aux mots corrects d'origine de l'ensemble du texte, et pour extraire de nouveaux paramètres liés à la personne qui parle au cours de l'évaluation des mots qui constituent la totalité du texte et dont certains sont corrigés, et des attributs obtenus au moyen de l'unité de reconnaissance vocale (1), et en ce que l'unité de reconnaissance vocale (1) est conçue pour stocker les nouveaux paramètres liés à la personne qui parle.
